# EUROPÄISCHE PATENTSCHRIFT

(11) **EP 0 708 697 B1**
(45) Veröffentlichungstag und Bekanntmachung des Hinweises auf die Patenterteilung: **21.05.1997**
(21) Anmeldenummer: 94924252.3
(22) Anmeldetag: 15.07.1994
(51) Int. Cl.: B23K 9/127

(54) **VERFAHREN ZUM SCHWEISSEN**
WELDING METHOD
PROCEDE DE SOUDAGE

(30) Priorität: 16.07.1993 DE 4323924
(43) Veröffentlichungstag der Anmeldung: 01.05.1996
(60) Teilanmeldung: 96118248.2
(73) Patentinhaber: KUKA Schweissanlagen & Roboter GmbH, D-86165 Augsburg (DE)
(72) Erfinder: RIPPL, Peter, D-86163 Augsburg (DE); STADLER, Josef, D-86316 Wulfertshausen (DE); KAIMER, Horst, D-89346 Bibertal (DE); SAUER, Miroslav, D-86356 Neusäss (DE); MÜHLBERGER, Dieter, D-86163 Augsburg (DE)
(74) Vertreter: Ernicke, Hans-Dieter, Dipl.-Ing.
(86) Internationale Anmeldenummer: EP9402333
(87) Internationale Veröffentlichungsnummer: WO9502484

(56) Entgegenhaltungen:
- EP-A- 0 195 089
- EP-A- 0 301 098
- DE-A- 2 410 866
- US-A- 4 544 825
- US-A- 4 990 743
- PATENT ABSTRACTS OF JAPAN vol. 4, no. 135 (C-025) 20. September 1980 & JP,A,55 084 573 (NIPPON STEEL CORP) 25. Juni 1980
- DATABASE WPI Section Ch, Week 9038, Derwent Publications Ltd., London, GB; Class M23, AN 90289131 TONKAL ET AL. & SU,A,1 547 995 (AS UKR ELECTRODYNAMICS) 7. März 1990

## Beschreibung

Die Erfindung betrifft ein Verfahren zum Schweißen, insbesondere zum Lichtbogen-Schutzgasschweißen, mit den Merkmalen im Oberbegriff des Hauptanspruchs.

Ein solches Verfahren ist aus der JP 550 84 573 bekannt. Die Entgegenhaltung befaßt sich mit dem Schweißen zweier unterschiedlich dicker Bleche, wobei mit der mechanischen Pendelbewegung Strom und Spannung parallel verändert werden. Die Veränderungen sind gegenläufig. Strom und Spannung sind auf dem dicken Blech wesentlich höher als auf dem dünneren Blech, wobei die Verweilzeit auf dem dicken Blech jedoch deutlich niedriger als auf dem dünnen Blech ist.

Aus der US-C 4 544 825 ist es bekannt, beim Schweißen gewölbter Oberflächen von Turbinenschaufeln oder dergleichen empfindlichen Bauteilen die Stromhöhe über den Verlauf der Pendelbewegung anzupassen. Die Bauteile werden mit einem Schweißüberzug versehen. An den Bauteilrändern wird der Schweißstrom erniedrigt, um ein Abschmelzen der empfindlichen Werkstückränder zu verhindern. Andererseits dient die Stromabsenkung der besseren Meßbarkeit der Werkstückränder, die über Stromänderungen des Lichtbogens erfaßt werden sollen. Außerdem soll einem Erlöschen des Lichtbogens beim Überfahren der Ränder vorgebeugt werden. Die geometrischen Pendelbewegungen sind beim Schweißen gleich. Über die Kantenabtastung des Werkstücks mittels Lichtbogen-Stromüberwachung wird eine Zentrierung der Pendelmittellinie bewirkt. Die Stromabsenkung erfolgt in Abhängigkeit vom Pendelhub, wobei die Absenkung bei einer vorbestimmten Amplitude einsetzt, die weit genug vom Werkstückrand entfernt ist.

Die EP-A 0 195 089 lehrt die Anpassung der Amplituden einer Pendelbewegung beim Schweißen an unterschiedliche Werkstückdicken. Dabei wird nur die Amplitude der Pendelauslenkung verändert, nicht aber die Frequenz und die Grundform des Pendelmusters. Es findet lediglich eine einfache Dreiecksform der Pendelbewegung Anwendung. Die Auslenkung ist auf dem dünnen Blech stärker als auf dem dicken Blech, so daß der Wärmeeintrag auf dem empfindlicheren und dünneren Blech größer als auf dem dickeren ist. Die Entgegenhaltung zielt darauf ab, die Schweißnaht volumenmäßig mehr zum einen oder anderen Blech verlagern zu können.

Die SU 154 79 95 offenbart eine Mikroprozessorsteuerung für die Bewegungen einer Schweißdüse, die nach mehreren Richtungen beweglich ist. Die Schweißdüse kann kreisende oder wiederkehrende Düsenbewegungen ausführen.

Es ist Aufgabe der vorliegenden Erfindung, für die unterschiedlichen Schweißaufgaben eine größere Prozeßsicherheit zu erreichen.

Die Erfindung löst diese Aufgabe mit den Merkmalen im Hauptanspruch.
Durch die an der thermischen Belastbarkeit orientierte Veränderung der an der Schweißstelle eingebrachten Wärmeenergie in Abhängigkeit von Material und/oder Geometrie des Werkstücks wird eine höhere Gleichmäßigkeit der Schweißbedingungen erreicht. Hierdurch wird eine größere Prozeßtiefe auch bei wechselnden Bauteiltoleranzen erzielt. An der Schweißstelle kann es nicht mehr zu Überhitzungen, zu einem Durchbrennen der Naht an dünnen Blechen, zu einem ungleichmäßigen Füllen von Nähten, zu einem Aufbrennen beschichteter Bleche oder zu sonstigen Schweißfehlern kommen.

Besondere Vorteile ergeben sich beim Schweißen unterschiedlicher Werkstücke, die im Werkstoff und/oder der Geometrie, z.B. der Blechdicke, differieren. Gleiches gilt auch bei Werkstücken mit unterschiedlichen Schweißbedingungen, bei denen z.B. die Wärme an der Schweißstelle verschieden schnell abgeführt wird. Für die beiden Werkstücke läßt sich mit der Erfindung die Wärmezufuhr unterschiedlich einstellen und dabei optimieren.

Die Steuerung der eingebrachten Wärmeenergie kann auf verschiedene Weise erfolgen. Einerseits läßt sich dies über eine Bewegung des Schweißwerkzeuges, d.h. z.B. über die Verweildauer oder den Abstand bzw. die Lichtbogenlänge, steuern. Je länger die Verweildauer und/oder je kürzer der Lichtbogen, desto höher ist der Einbrand. Die mechanischen Bewegungen können quer zur Bahn bzw. Schweißnaht und auch in deren Längsrichtung ablaufen. Vorzugsweise handelt es sich dabei um Pendelbewegungen, die sich periodisch wiederholen.

Andererseits kann die eingebrachte Wärmeenergie auch über den Prozeßparameter gesteuert werden, beispielsweise die Stromhöhe oder die Drahtvorschubgeschwindigkeit. Beim Impulsschweißen kann auch über die Pulssteuerung Einfluß genommen werden. Die Prozeßparameter können ebenfalls pendeln und sich vorzugsweise periodisch verändern.

Mit den mechanischen Pendelbewegungen werden synchron und gleichläufig auch die Prozeßparameter verändert. Hierdurch läßt sich die Wärmeeinbringung besonders gut steuern.

In der bevorzugten Ausführungsform werden die mechanischen Bewegungen und die Veränderungen der Prozeßparameter von der Manipulatorsteuerung aus gesteuert, vorzugsweise über einen Funktionsgenerator. Dies ermöglicht eine besonders gute Beherrschung der Einstellungen und eine sichere Synchronisation.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Fig. 1:: einen Manipulator mit einem Schweißwerkzeug und einer Manipulatorsteuerung nebst Funktionsgenerator,
- Fig. 2:: mehrere Programmierfenster für den Funktionsgenerator mit verschiedenen Pendeleinstellungen und
- Fig. 3: eine Schweißaufgabe mit zugehörigen Pendeleinstellungen.

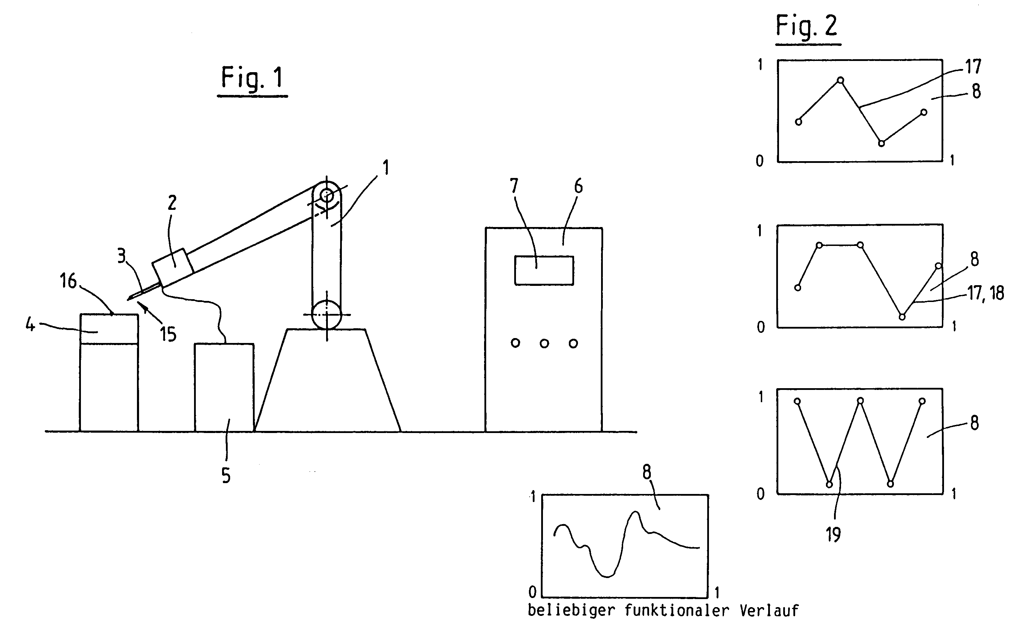

Fig. 1 zeigt in einer schematischen Anordnung einen mehrachsigen Manipulator (1), vorzugsweise einen sechs- oder mehrachsigen Industrieroboter, der an seiner Hand (2) ein Schweißwerkzeug (3) angeflanscht hat. Hierbei handelt es sich vorzugsweise um einen Schweißbrenner (15) zum Lichtbogen-Schutzgasschweißen. Alternativ kann es aber auch ein beliebiges anderes Schweißwerkzeug sein.

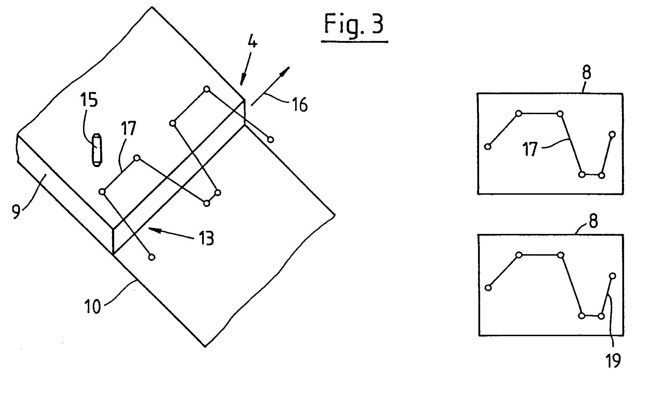

Der Manipulator (1) führt das Schweißwerkzeug (3) entlang einer vorgegebenen Bahn (16) an einem Werkstück (4). Fig. 3 zeigt hierzu ein Einzelbeispiel.

Eine Schweißstromquelle (5) ist mit dem Schweißwerkzeug (3) verbunden. Zu der Anordnung gehören noch eine Schutzgasquelle und gegebenenfalls eine Versorgung und ein Antrieb für einen Schweißdraht, der am Schweißbrenner (15) austritt. Letztere sind der Übersicht halber nicht dargestellt.

Der Manipulator (1) besitzt eine Manipulatorsteuerung (6), die einen Rechner mit mindestens einem Prozessor und einem oder mehreren Datenspeichern für Programme, Parameter und dergleichen Daten aufweist. In der Manipulatorsteuerung (6) ist die zu verfolgende Bahn (16), d.h. die Schweißnaht in ihrem Verlauf und ihrer Lage am Werkstück (4) gespeichert. Durch geeignete Maßnahmen wird die Ist-Lage der Bahn (16) gesucht und die gespeicherte Soll-Lage in der Manipulatorsteuerung (6) entsprechend abgeglichen. Danach verfolgt der Manipulator (1) exakt die programmierte Bahn (16).

Zur Optimierung der Schweißbedingungen wird während des Bahnvorschubs die an der Schweißstelle (13) eingebrachte Wärmeenergie in Anpassung an das Material und/oder an die Geometrie des Werkstücks (4) örtlich und/oder zeitlich verändert. Die Einbringung der Wärmeenergie kann auf verschiedene Weise, beispielsweise auf mechanischem und/oder prozeßtechnischem Weg beeinflußt werden.

Die Höhe der eingebrachten Wärmeenergie hängt von der Zeit und/oder der Intensität ab. Die Zeit kann beispielsweise über die Verweildauer des Schweißbrenners (15) bzw. des Lichtbogens gesteuert werden. Im Grunde ist dies auch auf prozeßtechnischem Weg möglich, beispielsweise durch Ein- und Ausschalten des Schweißstroms. Die Intensität läßt sich auf mechanischem Weg über den Abstand des Schweißbrenners (15) von der Schweißstelle (13) bzw. über die Länge des Lichtbogens steuern. Auf prozeßtechnischem Weg ist dies über eine entsprechende Veränderung der Prozeßparameter, beispielsweise des Schweißstroms, der Pulsfrequenz, der Pulsbreite, der Drahtvorschubgeschwindigkeit oder dergleichen möglich.

Die mechanischen Bewegungen und/oder die Veränderungen der Prozeßparameter können in einem frei definierbaren Funktionsverlauf vorgenommen werden. So können symmetrische oder asymmetrische, dreiecks-, trapez- oder sinusförmige oder beliebige andere Verläufe definiert werden. Fig. 2 zeigt hierzu einige beispielhafte Kurvenverläufe in Fenstern (8). Vorzugsweise handelt es sich hierbei um periodische Veränderungen in der Art einer Pendelbewegung.

Die mechanischen Bewegungen des Schweißwerkzeugs (3) untergliedern sich vorzugsweise in zwei Bereiche.

Dies ist einerseits das sogenannte Geometriependeln (17), bei dem das Schweißwerkzeug (3) seitlich zur Bahn (16) bzw. zur Schweißnaht ausgelenkt wird. Dies beinhaltet, daß die Auslenkbewegung horizontal, aber auch vertikal oder in einer beliebigen Ebene schräg erfolgen kann. Die Auslenkbewegung kann zudem im rechten Winkel quer zur Bahn (16), aber auch schräg gerichtet sein.

Das sogenannte Geschwindigkeitspendeln (18) besteht in einer Veränderung der Bahnvorschubsgeschwindigkeit, indem das Schweißwerkzeug (3) längs der verfolgten Bahn (16) beschleunigt und/oder gebremst wird. Im Extremfall kann sich eine Start/Stop-Bewegung oder sogar eine Rückwärtsbewegung ergeben.

Die Veränderung der Prozeßparameter wird als Technologiependeln (19) bezeichnet. Hierbei kann ein einzelner Prozeßparameter, z.B. der Schweißstrom, verändert werden. Es ist aber auch möglich, mehrere Prozeßparameter zu modulieren.

Zur Steuerung der eingebrachten Wärmeenergie kommt erfindungsgemäß das Technologiependeln (19) zum Einsatz, das zudem mit einem Geometriependeln (17) und/oder einem Geschwindigkeitspendeln (18) kombiniert ist. Das Technologiependeln (19) läuft hierbei synchron zu den mechanischen Pendelbewegungen ab.

Die drei vorerwähnten Pendelarten können auf beliebigen konstruktiv technischen Wegen erzielt und gesteuert werden. Zum Beispiel lassen sich die mechanischen Pendelbewegungen durch ein Pendelgerät mit Kurvenscheiben realisieren. In ähnlicher Weise läßt sich auch der Drahtantrieb beeinflussen. Über angesteuerte Potentiometer oder dergleichen können beispielsweise die elektrischen Prozeßparameter verändert werden. Zudem ist es möglich, Kennlinien für den Schweißstrom an der Schweißstromquelle (5) umzuschalten, insbesondere wenn es sich hierbei um eine transistorisierte Schweißstromquelle handelt.

In der bevorzugten Ausführungsform der Erfindung erfolgt die Steuerung aller Pendelbewegungen über die Manipulatorsteuerung (6). Diese weist dazu einen Funktionsgenerator (7) auf. Er besteht ebenfalls aus einem Rechner mit mindestens einem Prozessor und einem oder mehreren Datenspeichern sowie zugehöriger Software. In der bevorzugten integrierten Ausführungsform kann der Funktionsgenerator (7) auf die Hardware der Manipulatorsteuerung (6) zurückgreifen. Er kann auch als Softwarefunktion in der Manipulatorsteuerung (6) realisiert sein. Der Funktionsgenerator (7) kann modular aufgebaut sein und mehrere Pendelarten gleichzeitig und synchron steuern.

Die mechanischen Pendelbewegungen und/oder die Prozeßpendelbewegungen werden in mehreren Funktionsabschnitten gleicher oder zumindest proportionaler Größe im Funktionsgenerator (7) eingegeben. Dies geschieht über eine Benutzeroberfläche, die Fenster (8) mit normierter Größe zur Verfügung stellt. Der Funktionsgenerator (7) verfügt im gezeigten Ausführungsbeispiel über drei Fenster (8), in die verschiedene Parameter für die unterschiedlichen Bewegungen und/oder Prozesse eingegeben werden können. Die Fensterzahl kann bei geeigneter Auslegung von Hardware und Software beliebig kleiner oder größer sein. Die Parameter werden als Wertepaare in den normierten Fenstern (8) eingegeben. Hierbei handelt es sich um qualitative Daten. Sie werden durch Bezugsgrößen, insbesondere Offset-Faktoren und/oder Verstärkungsfaktoren quantifiziert. Aus den einzelnen Wertepaaren bzw. Parametern können im Funktionsgenerator (7) sogenannte Splines errechnet werden.

Aus den Wertepaaren in den Fenstern (8) und den hieraus gewonnenen Splines werden Funktionen für die mechanischen und prozeßtechnischen Pendelbewegungen berechnet. Die Funktionen laufen in den eingangs erwähnten Funktionsabschnitten synchron ab. Die Synchronisation erfolgt vorzugsweise über den Weg des Bahnvorschubs (16). Der Funktionsgenerator (7) startet vorzugsweise mit Beginn der Manipulatorbewegung (1) entlang der Bahn (16) die erwähnten Funktionsabschnitte. Der Start erfolgt gleichzeitig, wobei die Funktionsabschnitte mit den darin vorgegebenen Funktionen synchron und simultan abgearbeitet werden. Die Funktionsabschnitte werden am Ende gemeinsam und zugleich abgeschlossen und erneut gestartet. Dadurch werden die Funktionsabschnitte zyklisch wiederholt, wobei sie Start und Ende nach dem Synchronisationsbezug, hier den Bahnvorschub richten. Der Zyklus bzw. der Takt bleibt vorzugsweise gleich.

Die Parameter bzw. die daraus berechneten Funktionen bleiben zumindest für die Dauer des Funktionsabschnittes im Funktionsgenerator (7) gespeichert. Je nach Komplexität der Bewegungen und/oder Prozesse können die Funktionen wiederholt oder verändert werden. Im einfachsten Fall wird die gleiche Funktion ständig wiederholt, indem beispielsweise eine gleichbleibende, mit jedem Funktionsabschnitt sich periodisch wiederholende Pendelbewegung erzeugt wird.

Es ist aber auch möglich, die Funktionen permanent oder periodisch zu verändern. Hierzu können die Funktionen oder die Wertepaare bzw. Parameter in Datenspeichern festgehalten und nach Vorgabe eines Programms einzeln und selektiv abgerufen werden. Hierbei könnten im einfachsten Fall die Parameter eingegeben und hieraus im Funktionsgenerator (7) Funktionen berechnet werden. Alternativ können auch gleich die fertigen Funktionen bereitgestellt und eingespielt werden.

Fig. 3 verdeutlicht in einem Einzelbeispiel die Erfindung anhand einer Schweißaufgabe, bei der ein dickes Blech (9) und ein dünnes Blech (10) miteinander zu verschweißen sind. Hierbei führt der Schweißbrenner (15) eine asymetrische Pendelbewegung (17) (sogenanntes Geometriependeln) aus. Er verweilt auf dem dicken Blech (9) länger als auf dem dünnen Blech (10). Durch die längere Verweilzeit des Lichtbogens ergibt sich eine stärkere Wärmeeinbringung und damit ein tieferer Einbrand im dicken Blech (9). Das dünne Blech (10) wird hingegen nur kurzzeitig thermisch belastet, so daß die Naht am dünneren Blech (10) nicht durchfällt. Es ergibt sich eine gleichmäßige Schweißnaht.

Das Geometriependeln (17) wird von einem angepaßten Technologiependeln (19) begleitet. Hierbei werden gemäß der angepaßten Funktion die Prozeßparameter, insbesondere der Schweißstrom entsprechend den mechanischen Pendelbewegungen hoch und tief geschaltet. Auf dem dicken Blech (9) sind die Prozeßparameter höher als auf dem dünnen Blech (10).

In ähnlicher Weise kann auch bei zwei Werkstücken aus unterschiedlichen Werkstoffen verfahren werden. Das thermisch empfindlichere und damit schneller aufheizbare Blech entspricht dem dünneren Blech (10) und erhält weniger Wärme als das andere Blech. Auf diese Weise lassen sich auch besonders kritische Werkstückpaarungen bearbeiten, die sich im Material und in der Geometrie unterscheiden.

In einer weiteren Abwandlung kann dem konstanten Bahnvorschubgeschwindigkeit in Längsrichtung der Bahn (16) eine modulierte Geschwindigkeitsänderung überlagert werden. Der Schweißbrenner (15) wandert dabei abwechselnd langsamer und schneller vor. Die Prozeßparameter werden hierbei gegenläufig (19) gesteuert. Beim langsamen Vorschub werden der Schweißstrom oder ein anderer Prozeßparameter hochgeschaltet.

Die Pendelfrequenzen bewegen sich vorzugsweise im Bereich zwischen 0,2 und 5 Hz. Die beim mechanischen Pendeln (17,18) und beim Technologiependeln (19) verwendeten Frequenzen können sich jedoch unterscheiden, indem beispielsweise die Prozeßparameter mit doppelter Frequenz gegenüber den mechanischen Bewegungsparametern pendeln. Dabei wird jedoch, wie auch in den vorbeschriebenen Ausführungsbeispielen, sichergestellt, daß die Synchronisation der verschiedenen Pendelarten (17,18,19) erhalten bleibt, um im Sinne der Erfindung örtlich gezielt einen schwankenden Energieeintrag am Werkstück (4) zu erzeugen.

In den vorbeschriebenen Ausführungsbeispielen werden die verschiedenen Pendelbewegungen (17,18,19) nach Vorgaben und Sollwerten gesteuert. Die Vorgaben und Sollwerte können durch Probeschweißungen, aber auch durch Berechnungen über die Energiebilanz oder dgl. ermittelt werden.

Die Vorgaben und Sollwerte können für den Schweißjob vorab fest programmiert und dann abgefahren werden. Es ist alternativ auch möglich, die Steuerung variabel und bauteilbezogen vorzunehmen, beispielsweise über einen geeigneten voreilenden Sensor (14), der den Spalt vermißt und entsprechend die Vorgabewerte einstellt und gegebenenfalls auch während des Schweißjobs ändert. Bei unterschiedlichen Werkstücken mit differierender Wärmeeinbringung kann auch eine getrennte Steuerung erfolgen, wobei für jedes Werkstück ein oder mehrere eigene Sensoren eingesetzt werden können. In allen Fällen eignet sich der Funktionsgenerator (7) besonders.

Neben einer variablen Steuerung ist auch eine Regelung der Pendelbewegungen (17,18,19) möglich. Hierzu werden aussagefähige Daten über die Schweißqualität, die Werkstückbelastung oder dgl. aufgenommen und in die Steuerung, insbesondere den Funktionsgenerator (7), rückgeführt. Dies kann beispielsweise in einer Temperaturerfassung und einer Thermorückführung bestehen.

### BEZUGSZEICHENLISTE

- 1: Manipulator
- 2: Hand
- 3: Schweißwerkzeug
- 4: Werkstück
- 5: Schweißstromquelle
- 6: Manipulatorsteuerung
- 7: Funktionsgenerator
- 8: Fenster
- 9: Blech, dick
- 10: Blech, dünn
- 11: Spalt
- 12: Beschichtung
- 13: Schweißstelle
- 14: Sensor
- 15: Schweißbrenner
- 16: Bahn, Bahnvorschub
- 17: Pendelbewegung, Geometriependeln
- 18: Pendelbewegung, Geschwindigkeitspendeln
- 19: Pendelbewegung, Technologiependeln

## Patentansprüche

1. Verfahren zum Schweißen, insbesondere zum Lichtbogen-Schutzgasschweißen, von mehreren zu verbindenden Werkstücken (9,10) mit einem Schweißwerkzeug (3), das von einem Manipulator (1) entlang einer vorgegebenen Bahn (16) geführt wird, wobei das Schweißwerkzeug (4) mechanische Pendelbewegungen (17) mit seitlicher Auslenkung ausführt und parallel dazu die Prozeßparameter (19) periodisch in der Höhe verändert werden, und wobei die an der Schweißstelle (13) eingebrachte Wärmeenergie in Anpassung an das Material und/oder die Geometrie der Werkstücke (9,10) derart örtlich und/oder zeitlich verändert wird, daß die thermische Belastbarkeit der Werkstücke (9,10) nicht überschritten wird,
dadurch gekennzeichnet, daß
- das Schweißwerkzeug (3) die mechanischen Pendelbewegungen mit unterschiedlicher Verweildauer auf den Werkstücken (9,10) ausführt,
- die Synchronisation der mechanischen Pendelbewegung (17) und der pendelnden Prozeßparameter (19) derart gleichläufig erfolgt, daß bei einer längeren Verweildauer bei der mechanischen Pendelbewegung (17) auch die Prozeßparameter (19) erhöht werden.

2. Verfahren nach Anspruch 1, dadurch **gekennzeichnet**, daß das mechanische und das prozeßtechnische Pendeln von der Manipulatorsteuerung (6) gesteuert wird.

3. Verfahren nach Anspruch 1 oder 2, dadurch **gekennzeichnet**, daß das mechanische und das prozeßtechnische Pendeln von einem Funktionsgenerator (7) in der Manipulatorsteuerung (6) gemeinsam und synchron gesteuert wird.

4. Verfahren nach Anspruch 1, 2 oder 3, dadurch **gekennzeichnet**, daß die Pendel-Frequenz ca. 0,2 bis 5 Hz beträgt.

5. Verfahren nach Anspruch 1 oder einem der folgenden, dadurch **gekennzeichnet**, daß die an der Schweißstelle (13) eingebrachte Wärmeenergie geregelt wird.

## Claims

1. A process for welding, in particular for gas-shielded arc welding, a plurality of workpieces (9, 10) to be connected, using a welding tool (3) which is guided along a predetermined path (16) by a manipulator (1), the welding tool (4) performing mechanical oscillating movements (17) with a lateral deflection, and the process parameters (19) parallel thereto being altered periodically in their value, and the thermal energy introduced at the welding point (13) being altered, to match the material and/or the geometry of the workpieces (9, 10), locally and/or temporarily such that the capacity for thermal loading of the workpieces (9, 10) is not exceeded, characterized in that
- the welding tool (3) performs the mechanical oscillating movements with a differing dwell time at the workpieces (9, 10),
- the synchronization of the mechanical oscillating movement (17) and the oscillating process parameters (19) is effected synchronously such that in the case of a relatively long dwell time of the mechanical oscillating movement (17) the process parameters (19) are also increased.

2. A process according to Claim 1, characterized in that the mechanical and process-engineering oscillation is controlled by the manipulator control (6).

3. A process according to Claim 1 or 2, characterized in that the mechanical and process-engineering oscillation is controlled in common and synchronously by a function generator (7) in the manipulator control (6).

4. A process according to Claim 1, 2 or 3, characterized in that the oscillation frequency is approximately 0.2 to 5 Hz.

5. A process according to Claim 1 or one of the following claims, characterized in that the thermal energy introduced at the welding point (13) is regulated.

## Revendications

1. Procédé de soudage, notamment à l'arc sous protection gazeuse, de plusieurs pièces (9, 10) à assembler au moyen d'un outil de soudage (3), qui est guidé par un manipulateur (1) selon une trajectoire (16) prédéterminée, l'outil de soudage (4) exécutant des mouvements mécaniques de balancement (17) avec excursion latérale et les paramètres (19) du processus étant, en parallèle, modifiés périodiquement quant au niveau, et dans lequel l'énergie thermique mise en oeuvre au niveau de la soudure (13) est modifiée localement et/ou dans le temps pour s'adapter au matériau et/ou à la géométrie des pièces (9, 10), de telle manière que la charge thermique admissible des pièces (9, 10) ne soit pas dépassée,
caractérisé par le fait que
- l'outil de soudage (3) effectue les mouvements mécaniques de balancement avec des durées différentes d'arrêt sur les pièces (9, 10),
- la synchronisation du mouvement mécanique de balancement (17) et des paramètres (19) d'oscillation du processus est effectuée en parallèle, de telle manière que, dans le cas d'une plus longue durée d'arrêt pendant le mouvement mécanique de balancement (17), les paramètres (19) du processus soient également augmentés.

2. Procédé selon la revendication 1, caractérisé par le fait que le balancement mécanique et les oscillations concernant le processus sont commandés par la commande (6) du manipulateur.

3. Procédé selon la revendication 1 ou 2, caractérisé par le fait que le balancement mécanique et les oscillations concernant le processus sont commandés, en commun et de manière synchrone, par un générateur de fonctions (7) présent dans la commande (6) du manipulateur.

4. Procédé selon la revendication 1, 2 ou 3, caractérisé par le fait que la fréquence d'oscillation est d'environ 0,2 à 5 Hz.

5. Procédé selon la revendication 1 ou l'une des suivantes, caractérisé par le fait que l'énergie thermique mise en oeuvre à l'emplacement de la soudure (13) est régulée.
